# EUROPEAN PATENT SPECIFICATION

(11) **EP 2 098 111 B1**
(45) Date of publication and mention of the grant of the patent: **18.07.2018**
(21) Application number: 07860044.2
(22) Date of filing: 25.12.2007
(51) Int. Cl.: A01G 7/00, A01G 9/24, E04H 5/00

(54) **TRANSGENIC PLANT FACTORY**
FABRIK FÜR TRANSGENE PFLANZEN
USINE DE PLANTES TRANSGÉNIQUES

(30) Priority: 28.12.2006 JP 2006354177
(43) Date of publication of application: 09.09.2009
(73) Proprietor: KAJIMA CORPORATION, Tokyo 107-8388 (JP)
(72) Inventor: YASUNO, Rie, Sapporo-shi Hokkaido 062-8517 (JP); ITO, Akira, Sapporo-shi Hokkaido 062-8517 (JP); TANAKA, Teruyoshi, Sapporo-shi Hokkaido 062-8517 (JP); MATSUMURA, Takeshi, Sapporo-shi Hokkaido 062-8517 (JP); SOMA, Ichiro, Tokyo 107-8388 (JP); FUJITA, Hisaya, Tokyo 107-8388 (JP); TAKASUNA, Hiroyuki, Tokyo 107-8388 (JP)
(74) Representative: Wynne-Jones, Lainé and James LLP
(86) International application number: PCT/JP2007/074815
(87) International publication number: WO 2008/081772

(56) References cited:
- WO-A1-2006/013611
- JP-A- 01 171 412
- JP-A- 62 029 917
- JP-A- 62 029 918
- JP-A- 2003 047 457
- JP-A- 2004 353 875
- JP-A- 2006 094 754
- JP-A- 2006 094 754
- MATSUMURA K.: 'Heisakei System no Mochiita Idenshi Kumikae Shokubutsu ni yoru Yuyo Busshitsu Seisan' SHITA REPORT no. 23, 18 January 2006, pages 59 - 65, XP008142269
- YASUNO R. AND MATSUMURA K.: 'Idenshi Kumikae Shokubutsu Kojo' BIO INDUSTRY vol. 24, no. 2, 12 February 2007, pages 92 - 99, XP008109554

## Description

### TECHNICAL FIELD

This invention relates to a transgenic plant factory, more specifically a factory for cultivating transgenic plants modified to produce raw functional materials that plants originally do not produce, e.g. animal protein, vaccine etc., and turning the plants after harvest into such useful products as foodstuffs, pharmaceuticals and/or industrial reagents (hereinafter, these products may be inclusively referred to as "foodstuffs and/or pharmaceuticals").

### BACKGROUND ART

The recombinant DNA technology developed in 1980s made it possible to introduce useful genes and traits selectively into plants beyond species barrier or from entirely different kingdoms, and contributed to developments of plant breeding in agriculture. For example, disease-resistant or herbicide-tolerant transgenic crops such as soybean, corn, rape, cotton and potato have been developed using recombinant technology and put to commercial use for the purpose of labor-saving and cost-saving in agriculture. Further as shown in [non-patent literature No.1], crops being tolerate stressful environments by introducing stress-tolerant traits, e.g. drought-resistant or salinity-resistant genes, and corps for malnourished humans or animals by introducing nutrition-rich traits, e.g. genes of high productivity of oleic acid or beta-carotene, have been developed.

In recent years, transgenic recombinant plants are expected to go beyond plant breeding in agriculture and become effective means of producing raw functional materials for pharmaceuticals, e.g. human or animal drug for peroral administration, topical treatment and diagnoses etc. For example, [non-patent literature No.2] discloses a method of producing anti-viral material IFN-α, i.e. human-interferon-a, using transgenic plants such as tobacco, potato and strawberry into which anticancer gene IFN-α is introduced and expressed. According to this method, it would be possible to manufacture raw functional materials such as IFN-α by extracting and/or purifying gene products out of harvested transgenic plants or its specified organ/tissue (hereinafter referred to as "post-harvest plants") more effectively in quantity and in cost than by the conventional method.

Further, [patent literature No.1] discloses a peroral carrier system for transporting a functional immunogenic peptide orally to a target site in a living body, e.g. peroral vaccine system, using transgenic plants in which a fused gene obtained by fusing of the functional peptide gene with a Norwark virus (NLV) coat protein gene is introduced. It is reported that, for the purpose of preventing leucocytozoon disease of chickens, a hemorrhagic and anemic disease of chickens to be caused by infection with the hemosporidium (protozoan) *Leucocytozoon caulleryi,* experimental chickens were provided by oral administration with foodstuffs including post-harvest transgenic potato leaves into which introduced antigen LRE1 gene, i.e. gene for immunogenic LRE1 protein derived from *Leucocytozoon caulleryi* 2nd-generation schizont, and confirmed that antibody titer to *Leucocytozoon caulleryi* in blood of the chickens rose after completion of oral administration and become greater than that with no administration of transgenic potato leaves.

The advantages of producing process of raw functional materials using transgenic plants over conventional bio-process using cultured animal cell and/or other synthesis system are that (i) a larger scale production of the material is possible at lower cost, (ii) a risk of pollution or contamination of the material is minimized with germs or bacteria, e.g. pathogen microbe, and (iii) a long-term preservation of the material is possible at room temperature as plant seeds. Other advantages include that transgenic plants may be processed into foodstuffs, e.g. the aforementioned peroral vaccine, that can be took to patients orally without physical stresses such as intramuscular injection, resulting in reduction of medical waste such as syringes and needles. Transgenic plants may be edible as it is or eatable by reducing to powder, and processed into foodstuffs and/or pharmaceuticals without costly process of extraction and/or purification. Further, producing process using transgenic plants is not only worthwhile to produce products of the introduced gene, e.g. protein, vaccine etc, but also brings forth various chemical products, inclusive of non-protein products, by enzymatic reaction of the introduced enzyme gene.

### CITATION LIST

### PATENT LITERATURE

[Patent literature No.1] Japanese Patent Laying-open Publication No. 2005-341937
[Patent literature No. 2] JP 2006 094754 A discloses a cell culture facility.
[Patent literature No. 3] WO 2006/013611 A1 discloses a bio-grinding machine for the treatment and separate collection of organic refuse with airtight rubbish bag and automatic shoot washing and disinfecting system.

### NON PATENT LITERATURE

[Non-patent literature No.1] Japanese Society for Techno-innovation of Agriculture, Forestry and Fisheries, "Summary of Development of transgenic crops and foodstuff" October 2006, see <http://www.biotech-house.jp/qanda/>
[Non-patent literature No.2] Ken Matsumura, "Closed system for manufacturing useful materials using transgenic plants" 16th SHITA Symposium, SHATA Report No.23, January 18, 2006, pp59-65
[Non-patent literature No.3] Japanese Ministry of Education, Culture, Sports, Science and Technology and Japanese Ministry of the Environment, "Ministry ordinance regarding nonproliferation measures in research and development of gene modified living matter", January 29, 2004
[Non-patent literature No.4] Tadashi Ito et al., "Olericulture" published by Kawashima Publishing, 4th Edition, May 20, 1994, pp 226-230

### SUMMARY OF INVENTION

### TECHNICAL PROBLEM

For promoting commercial production of raw functional materials using transgenic plants, a facility is required for cultivating transgenic plants efficiently without harmful effect on environment. At the present time, commercial cultivation of transgenic crops rests on the premise that, after experiments in a laboratory, they are cultivated massively in an open field, i.e. open system. However, transgenic plants for producing raw functional materials are not required to cultivate as massive as the crops, and may be cultivated in a factory of relatively small scale when feasible indoor cultivation technique is available. For example, the aforementioned transgenic plants for producing anti-viral material IFN-α may require 100 square meters (= 1 are) in area at most for commercial scale cultivation. In addition, cultivation of transgenic plants in a factory is advantageous for quality and yield uniformity of the products.

In case transgenic plants are cultivated in a factory without harmful effect on environment, the factory is required to keep pollen and other plant organ/tissue as well as plant body within it, i.e. to be closed system. [Non-patent literature No.3] discloses a prior art for containing transgenic plants within a laboratory-scale facility. The prior art, however, is not applicable to a factory-scale facility where transgenic plants are not only cultivated but also processed into foodstuffs and/or pharmaceuticals for commercial use, and does not contain transgenic plants efficiently within a factory-scale facility. Mail-sterile plants may be used for the purpose of avoiding leakage of pollen, however, it is not a perfect solution to avoid leakage of transgenic plants since plants may regenerate through other organ/tissue than pollen. For promoting commercial production of raw functional materials using transgenic plants, it is necessary to develop a closed plant factory for cultivating transgenic plants and manufacturing post-harvest plants into foodstuffs and/or pharmaceuticals while containing them within it.

It is therefore an object of this invention to provide a plant factory for cultivating transgenic plants and manufacturing foodstuffs and/or pharmaceuticals from them as well as keeping them inside.

### SOLUTION TO PROBLEM

The present invention is set out in the appended claims. The embodiments, aspects and examples of the present description that do not fall within the scope of said claims are provided for illustrative purposes only and do not form part of the present invention.

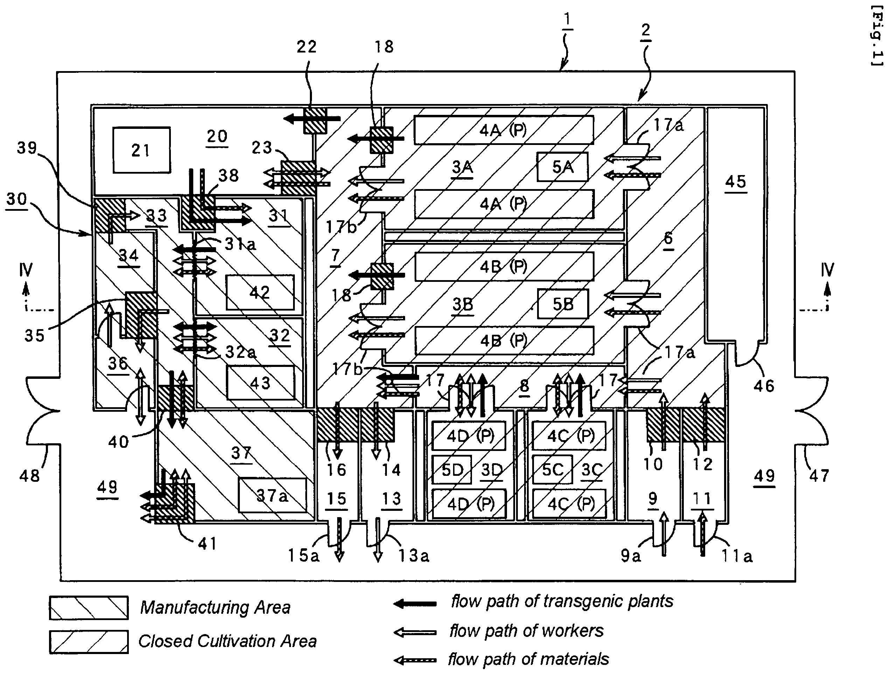

Referring to Fig 1, the present invention provides a transgenic plant factory (1) comprising a closed cultivation area (2) equipped with hydroponic system (4) for cultivating transgenic
plants (P) and air-conditioner (5) with exhaust air-filter (71) configured to keep the cultivation area (2) at negative pressure; an inactivation area (20) located next to the cultivation area (2) via air-locked passage (22) equipped with inactivation system (21) to prevent post-harvest transgenic plants (P) from sprouting, growing, proliferating or hybridizing; a manufacturing area (30) located next to the inactivation area (20) via air-locked passage (38) equipped with system (42, 43) for processing and/or preparing the post-harvest plants (P) into foodstuffs and/or pharmaceuticals; a sterilizer (60) for sterilizing the drainage from cultivation area (2); air-locked workers' gateways (10, 14, 39, 35) provided to the cultivation area (2) and the manufacturing area (30) respectively; the cultivation area (2), the inactivation area (20) and the manufacturing area (30) having respective air-conditioners (5) to independently control pressure from each other, the inactivation area (20) and the manufacturing area (30) optionally having a single air-conditioner to control pressure integrally, and configured to keep the inactivation area (20) at a negative pressure less strong than that at the cultivation area (2) and the manufacturing area (30) at a positive pressure.

Preferably, the closed cultivation area (2) includes air-locked workers' entrance (10) and exit (14) separately located with each other, an anterior chamber (6) connected to the entrance (10), a posterior chamber (7) connected to the exit (14) and located next to the inactivation area (20) via air-locked passage (22), and a plurality of cultivation chambers (3A, 3B) located between and connected to the anterior and posterior chambers (6, 7) via airtight gateway (17a, 17b), wherein the cultivation chambers (3A, 3B) are equipped with their respective hydroponic system (4A, 4B). Additionally or alternatively, the closed cultivation area (2) may include a hallway (8) located between and connected to the anterior and posterior chambers (6, 7) via airtight gateway (17a, 17b), and a plurality of cultivation chambers (3C, 3D) located alongside and connected to the hallway (8) via airtight gateway (17), wherein the cultivation chambers (3C, 3D) are equipped with their respective hydroponic system (4C, 4D) .

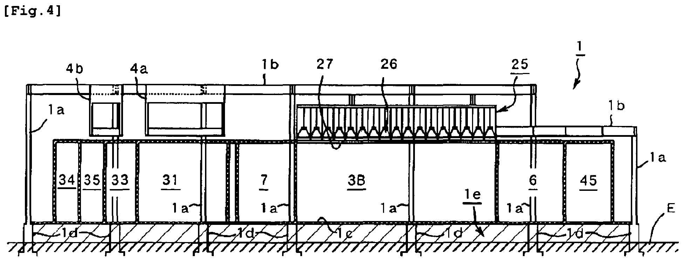

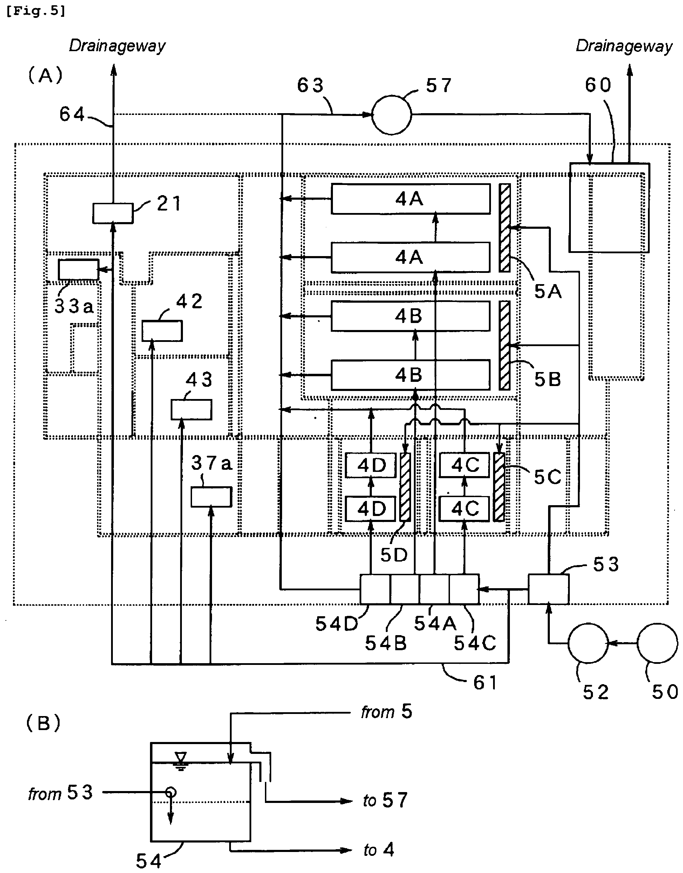

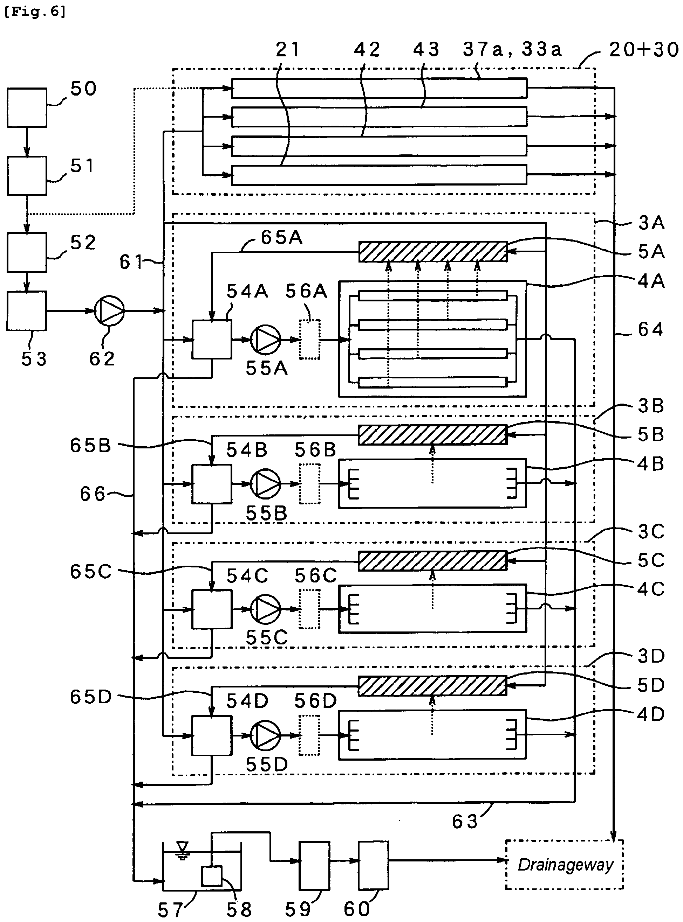

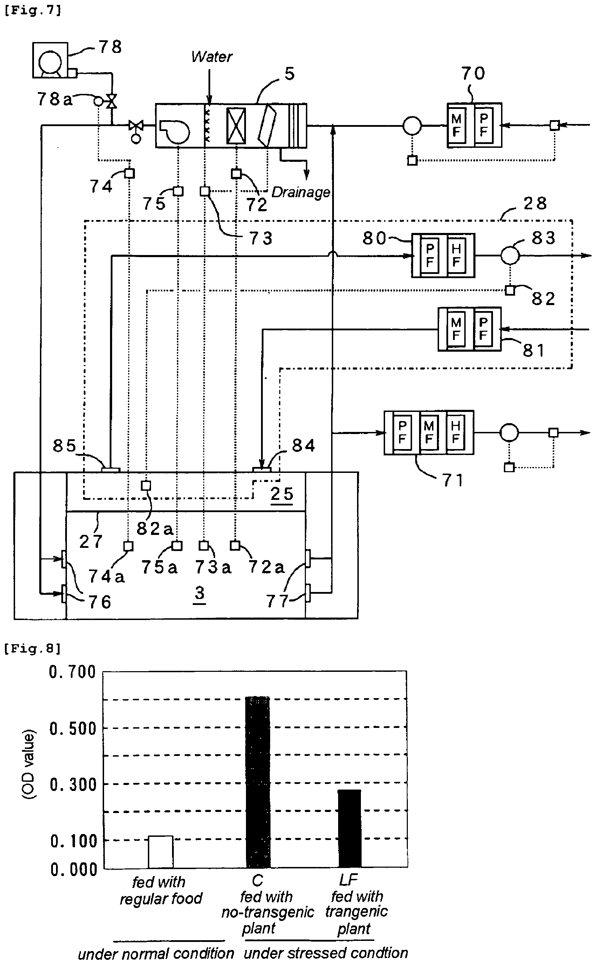

More preferably, as shown in Fig 5 and Fig 6, the cultivation chambers (3A, 3B, 3C, 3D) include their respective air-conditioner (5A, 5B, 5C, 5D) with exhaust air-filter (71) and water channel (65A, 65B, 65C, 65D) to lead drainage from the air-conditioners (5A, 5B, 5C, 5D) to their respective hydroponic system (4A, 4B, 4C, 4D). As shown in Fig 7, each of air-conditioners (5A, 5B, 5C, 5D) may includes a controller (74) for controlling carbon-dioxide (CO₂) in the cultivation chamber (3A, 3B, 3C, 3D). As shown in Fig 4 and Fig 7, each of cultivation chamber (3A, 3B, 3C, 3D) may includes wholly transparent ceiling board (27), airtight lighting box (25) attached on the ceiling board (27) and heat-exhauster (28) of the lighting box (25).

Desirably, the manufacturing area (30) includes a processing chamber (31) connected to the inactivation area (20) via air-locked passage (38), an anterior chamber (33) connecting to the processing chamber (31) and being kept at positive pressure more strong than that at the processing chamber (31), and a preparing chamber (32) connecting to the anterior chamber (33) and being kept at positive pressure more strong than that at the anterior chamber (33), wherein the air-locked workers' gateway (39, 35) is provided at the anterior chamber (33). The manufacturing area (30) may further include an arranging chamber (37) connecting to the anterior chamber (33) via air-locked passage (40) .

### ADVANTAGEOUS EFFECTS OF INVENTION

With the present invention, a transgenic plant factory (1) is provided with a closed cultivation area (2) being kept at negative pressure, an inactivation area (20) located next to the cultivation area (2) and being kept at negative pressure less strong than that at the cultivation area (2), and a manufacturing area (30) located next to the inactivation area (20) and being kept at positive pressure, such that transgenic plants (P) are cultivated in the closed cultivation area (2) and gathered through the inactivation area (20) into the manufacturing area (30) for processing and/or preparing into foodstuffs and/or pharmaceuticals. As a result, the following outstanding effects can be achieved.

1) As transgenic plants (P) are inactivated in the inactivation area (20) before passing to the manufacturing area (30), transgenic plants (P) do not sprout, grow, proliferate nor hybridize in the manufacturing area (30) or in natural environment after shipping out from it, resulting in containment of transgenic plants (P) within the factory (1).
2) As air pressure in the factory (1) is so controlled as to make airflow from the manufacturing area (30) to the closed cultivation area (2) through the inactivation area (20), pollen or other organ/tissue of transgenic plants (P) is prohibited from leaking out of the cultivation area (2).
3) As workers' access to the factory (1) may be restricted to the workers' gateway (10, 14, 39, 35) so as to prohibit workers' travelling between the cultivation area (2) and the manufacturing area (30), leaking of pollen or other organ/tissue of transgenic plants (P) by adhering to workers' clothing is prevented.
4) In case the closed cultivation area (2) includes a plurality of cultivation chambers (3A, 3B, 3C, 3D) with their respective hydroponic system (4A, 4B, 4C, 4D) and air-conditioner (5A, 5B, 5C, 5D), more than one transgenic plants (P) may be cultivated simultaneously without contamination each other and manufactured together into foodstuffs and/or pharmaceuticals .
5) In case the manufacturing area (30) includes a preparing chamber (32) being kept at positive pressure more strong than that at other chambers in the area (30), it may be possible to prepare high-qualified pharmaceuticals from transgenic plants (P) by avoiding influence from other areas or chambers without risks of contamination or pollution.
6) The factory (1) is a simple structure and may be constructed at small empty space in urban area near the market without harmful effect on environment, so that commercial production of the foodstuffs and/or pharmaceuticals using transgenic plants (P) will be developed by the factory (1).

### DESCRIPTION OF EMBODIMENTS

Fig 1 shows an embodiment of plant factory 1 according to the present invention for manufacturing foodstuffs and/or pharmaceuticals containing raw functional materials using transgenic plants P, such as transgenic strawberry. The factory 1 includes three areas, i.e. a closed cultivation area 2 for cultivating transgenic plants P hydroponically, a manufacturing area 30 for processing post-harvest plants P into foodstuffs and/or pharmaceuticals, and a inactivation area 20 located between two areas 2 and 30 for inactivating the post-harvest plants P. The cultivation area 2 and the inactivation area 20 are communicating by air-locked passage 22, e.g. air-locked pass-box located on partition wall between them for passing post-harvest plants P, and the inactivation area 20 and the manufacturing area 30 are communicating by air-locked passage 38, e.g. air-locked pass-box located on partition wall between them for passing the post-harvest plants P, so as to transfer transgenic plants P along such a designated flow path as black arrows shown in Fig 1. Further, the cultivation area 2 and the manufacturing area 30 are provided with their respective air-locked workers' entrances 10, 39 and exits 14, 35, e.g. air-locked antechamber 10, 39 with or without air-shower and post-chamber 14, 35 passed through for entering and exiting, so as to prohibit workers' traveling between the cultivation area 2 and the manufacturing area 30 as white arrows shown in Fig 1. In Fig 1, workers' travelling between the cultivation area 2 and the inactivating area 20 is permitted through air-locked gateway 23, e.g. air-locked chamber located on partition wall between them, but workers' traveling between them may be prohibited in case the inactivation area 20 is provided with its own air-locked workers' gateway (not depicted in Fig 1) separately from the workers' entrance 10 and exit 14 of the cultivation area 2.

In Fig 1, the closed cultivation area 2 includes four cultivation chambers 3A, 3B, 3C, 3D with equipped their respective hydroponic systems 4A, 4B, 4C, 4D and air-conditioners 5A, 5B, 5C, 5D. For preventing pollen and other plant organ/tissue of transgenic plants P from leaking out of the factory 1 through hydroponic system 4 and air-conditioner 5, each of hydroponic systems 4A, 4B, 4C, 4D is connected to a drainage sterilizer 60 (as shown in Fig 6) and each of air-conditioners 5A, 5B, 5C, 5D includes exhaust air-filter 71 (as shown in Fig 7). Hydroponics (also known as nutriculture) is a cultivation system of plants using water solution or fluid culture of nutrient, e.g. mineral salts, instead of soil, as described in detail on [non-patent literature No.4]. The hydroponic system 4 may be solution culture system that just use a nutrient solution, e.g. continuous flow solution culture system such as NFT or DFT, static solution culture system etc., or medium culture system that use a nutrient solution with a solid medium, e.g. sand culture system, gravel culture system, rock-wool culture system etc. In case the medium culture system is used, transgenic plants P can be surrounded and cultivated in a porous medium so that leakage of transgenic plants P into the solution may be prevented effectively and the drainage from hydroponic system 4 may be reduced efficiently for lightening the burden on the sterilizer 60.

In case the cultivation area 2 includes several cultivation chambers 3A, 3B, 3C, 3D, more than one transgenic plants P may be cultivated simultaneously without contamination in the cultivation area 2. For providing a suitable light condition for transgenic plants P, each of cultivation chambers 3A, 3B, 3C, 3D may be so designed that inside light condition is controllable with artificial lighting system 26 of variable emission spectrum and light intensity as shown in Fig 4. However, such artificial lighting system is not indispensable for cultivating transgenic plants P. If transgenic plants P can grow under the light of the sun, the cultivation chambers 3 may be designed to collect natural sunlight in it, or to be switchable of the collecting of the natural sunlight and the use of artificial lighting system 26. The cultivation chambers 3A, 3B, 3C, 3D are preferably so controlled separately as to be suitable inside temperature, humidity, airflow and carbon-dioxide level for various transgenic plants P by their respective air-conditioners 5A, 5B, 5C, 5D. When single transgenic plant P is cultivated in the factory 1, the cultivation area 2 is not necessary to be divided into several chamber 3 and may be used a single chamber as a whole.

In preferred embodiment, the cultivation area 2 includes an anterior chamber 6 connected to the air-locked workers' entrance 10 and a posterior chamber 7 connected to the air-locked workers' exit 14, and the cultivation chambers 3A, 3B are located between and connected to the anterior chamber 6 and the posterior chamber 7 via their respective airtight workers' entrance 17a and exit 17b. As white arrows shown in Fig 1, the cultivation workers go into the anterior chamber 6 of the cultivation area 2 through the air-locked entrance 10, after changing into working uniform in a dressing room 9, and enter into either cultivation chamber 3A or 3B through the airtight entrance 17a. After work in either cultivation chambers 3A or 3B, the workers go out to the posterior chamber 7 through the airtight exit 17b, and leave the cultivation area 2 through the air-locked exit 14 to an undressing room 13 for changing out of uniform. As the workers' entering flow path into the chambers 3A, 3B and returning flow path from there are planned to avoid crossing each other, risks of contamination and leakage of transgenic plants P incurred by interaction of workers' flow path may be prevented securely, even when different transgenic plants P are cultivated in the chambers 3A, 3B. Further, as hatching arrows shown in Fig 1, the cultivation area 2 may be provided with a air-locked materials' entrance 12 connected to the anterior chamber 6 and a air-locked materials' exit 16 connected to the posterior chamber 7, similar to the workers' entrance 10 and exit 14, so as to avoid crossing of a materials' entering flow path and exit flow path, in order to prevent contamination and leakage of transgenic plants P incurred by interaction of materials' flow path. Though not depicted in Fig 1, the posterior chamber 7 may be equipped with a temporary holder, e.g. ultra-deep freezer, of post-harvest transgenic plants P gathered from the cultivation area 2. It is desirable to provide the posterior chamber 7 with a waste disposer, e.g. autoclave, for disposing of and inactivating dead leaves and other waste or debris of the post-harvest plants P, and the inactivated waste may be moved out of the cultivation area 2 through air-locked materials' exit 16 and carrying-out room 15.

Additionally or alternatively, the closed cultivation area 2 may include a hallway 8 located between and connected to the anterior chamber 6 and the posterior chambers 7 via airtight workers' entrance 17a and exit 17b, and the cultivation chambers 3C, 3D may be located alongside and connected to the hallway 8 via a airtight gateway 17. The workers go into either cultivation chamber 3C or 3D from the anterior chamber 6 through the airtight entrance 17a and hallway 8, and go out from the chamber 3C or 3D after work to the posterior chamber 7 through the hallway 8 and airtight exit 17b, as white arrows shown in Fig 1. The workers of the cultivation chamber 3C, 3D may be allowed to travel in one direction from entrance 17a to exit 17b on the hallway 8 in order to avoid interaction of workers' flow path and prevent leakage of transgenic plants P, so that a number of cultivation chambers 3 may be arranged contiguously and closely even when the cultivation area 2 is rather small in area. However, when different transgenic plants P are cultivated in the cultivation chambers 3C and 3D, care must be taken for avoiding interaction of workers' flow path since the exit flow path from the cultivation chamber 3C and the entering flow path into cultivation chamber 3D may be crossed.

The inactivation area 20 is located next and connected to the posterior chamber 7 of cultivation area 2 via air-locked passage 22 and air-locked gateway 23, and equipped with inactivation system 21. The workers go into the inactivation area 20 from the posterior chamber 7 through the air-locked gateway 23, and after work return to the posterior chamber 7 through the gateway 23 and leave there through the air-locked exit 14, as white arrows shown in Fig 1. Post-harvest transgenic plants P are transferred from the cultivation area 2 into the inactivation area 20 through the air-locked passage 22. The inactivation system 21 provides a process of rendering the post-harvest plants P inactive such that plants P does not sprout, grow, proliferate or hybridize under the natural environment while retaining and keeping functional activity of inside materials, e.g. the gene products and/or enzymatic reaction products of the gene. The inactivation system 21 may be selected from the group consisting of freeze-drying device, grinder, heater and chemical treatment device. As shown in experimental examples 1 and 2 below, transgenic plants P are deprived of sprouting ability of the seeds by freeze-drying process while retaining functional activity of the gene products. Similarly, grinding process, heating process and chemical treating process also deprive transgenic plants P of sprouting, growing, proliferating or hybridizing ability while retaining functional activity of the gene products, on condition that grinding size, heating temperature and chemical varieties are suitably selected with transgenic plants P based on experiments.

### [Experimental Example 1]

Transgenic strawberry into which introduced IFN-α gene (transgenic line of hIFN: IFN62) was cultivated, and post-harvest fruits were preserved in refrigerator at -80°C for saving up enough amount to experiment. Preserved fruits were inactivated by freeze-drying device (RLEII made by KYOWA VACUUM TECHNOLOGY K. K. in Japan) and packed in sealed container and kept at desiccator. In the experiment, healthy 500 seeds were picked up from the freeze-dried fruits by tweezers and, after sterilized by soaking in 1% solution of sodium hypochlorite for 15 minutes followed by rinsing with distilled water three times, scattered in 20 sheets of wetted filter-paper on Petri dish of 9cm in diameter with 25 seeds each. The sheets sown with seeds were left in incubator under control at 24°C and 16 hours day-length, and observed for 12 weeks while wetting the sheets with water periodically whether the seeds were sprouting or not. Similar experiments were performed with different transgenic strawberries into which introduced lactoferrin gene (two lines of LF125 and LF145) and with no-transgenic strawberry (HS-13: Control). Table 1 shows the results of these four experiments that there are no seeds of any transgenic line to sprout in 12 weeks when inactivated.

**[Table 1]**

| Line | Number of sample | Number of sprouting | Rate of sprouting (%) |
|---|---|---|---|
| Control | 500 | 0 | 0.0 |
| LF125 | 500 | 0 | 0.0 |
| LF145 | 500 | 0 | 0.0 |
| IFN62 | 500 | 0 | 0.0 |

For comparison, similar experiments were performed with seeds collected from freshly harvested fruits of transgenic strawberry LF145 and no-transgenic strawberry HS-13 (Control) except inactivation process. 3 sheets of wetted filter-paper sowed with 25 seeds each were prepared and left in incubator to observe for 12 weeks whether the seeds were sprouting or not. Table 2 shows the result of this experiment that the fresh seeds of any transgenic line have ability to sprout out, though number of experimented transgenic lines is not enough. In comparison with Table 1 and Table 2, it would be concluded that transgenic strawberry is deprived of sprouting ability of the seeds by freeze-drying process.

**[Table 2]**

| Line | Number of sample | Number of sprouting | Rate of sprouting (%) |
|---|---|---|---|
| Control | 75 | 54 | 72.0 |
| LF145 | 75 | 47 | 62.7 |

### [Experimental Example 2]

For the purpose of confirming that the gene product of transgenic strawberry retains functional activity even after freeze-drying process of Experimental Example 1, further experiments were performed. In this experiment, freeze-dried fruit of transgenic strawberry into which introduced lactoferrin gene (LF strawberry) and freeze-dried fruit of no-transgenic strawberry (C strawberry) were prepared and reduced to powder, and fed to stress-induced immune mice by oral administration, and then blood level of IL6, i.e. interleukin 6 acting as cytokine, of the mice were measured by ELISA (Enzyme-Linked ImmunoSorbent Assay) method. Five mice under stressed conditions are fed with either of LF strawberry powder or C strawberry powder for one week with one gram (1g) per day, and took a blood sample to test for blood IL6 level. For comparison, similar experiments were performed using mice under normal condition fed with regular food for testing for blood IL6 level of normal mice. Fig 8 shows the result of this experiment that blood IL6 level was decreased more significantly in mice fed with LF strawberry than mice fed with C strawberry. Similar testing of other cytokines, i.e. IL2, IL4, IL12, IL1β, IFNγ, TNFα, were performed and confirmed that blood cytokine level decrease more significantly in mice fed with LF strawberry than mice fed with C strawberry. From these experiments, it would be concluded that the gene product in transgenic plants P retains functional activity, e.g. lactoferrin activity, even after freeze-drying process, although sprouting ability is deprived of by freeze-drying process as mentioned above.

In Fig 1, the manufacturing area 30 includes a processing chamber 31 being connected to the inactivation area 20 via air-locked passage 38, an anterior chamber 33 connecting to the processing chamber 31 via airtight gateway 31a, a preparing chamber 32 connecting to the anterior chamber 33 via airtight gateway 32a, and an arranging chamber 37 connecting to the anterior chamber 33 via air-locked passage 40. The air-locked entrance 39 and exit 35 to the manufacturing area 30 are provided at the anterior chamber 33. The manufacturing workers go into a dressing room 34 for changing into working uniform (e.g. dust-free clothes) through entrance room 36, and enter into either the processing chamber 31 or the preparing chamber 32 through the air-locked entrance (e.g. antechamber with air-shower) 39 and the anterior chamber 33 as white arrows shown in Fig 1. After work in either processing chamber 31 or preparing chamber 32, the workers go out and leave to the entrance room 36 through the anterior chamber 33 and the air-locked exit 35. The air-locked exit 35 may be served as undressing chamber for changing out of uniform. As the workers' entering flow path through dressing room 34 and returning flow path through undressing chamber 35 are separated and do not cross each other, risks of pollution or contamination of the uniform is effectively eliminated. As shown in Fig 5, the dressing room 34 may be equipped with hand-wash device 33a so as to make workers wash their hands before air-shower in the entrance 39 and entering into the anterior chamber 33. The airtight gateway 31a, 32a of the processing chamber 31 and preparing chamber 32 may be replaced with air-locked gateway, e.g. air-locked antechamber passed through for entering and exiting, in case the manufacturing area 30 has enough space affording to them.

The processing chamber 31 is equipped with processing system 42 for processing transgenic plants P into foodstuffs and/or pharmaceuticals for various uses, and the preparing chamber 32 is equipped with preparing system 43 for preparing the foodstuffs and/or pharmaceuticals for specialized use, e.g. medical or industrial uses. In case transgenic plants P are edible as it is without extraction or purification process, e.g. the aforementioned peroral vaccine, the processing system 42 may be a pulverizing or crushing device, e.g. mixer, for reducing or shaping transgenic plants P into powder or tablet form for foodstuffs and/or pharmaceuticals. In case raw functional materials is required to extracted or purified from transgenic plants P, the processing system 42 may be those for taking the raw functional materials out of transgenic plants P, e.g. chromatography system, ultracentrifuge system etc. The preparing system 43 may be an encapsulating device for enclosing the raw functional materials took out by the processing system 42 in a small container, e.g. capsule or ampoule, with or without additives such as stabilizer, so as to make the raw functional materials more usable and accessible foodstuffs and/or pharmaceuticals. When human or animal drug or industrial reagents are prepared in the manufacturing area 30, the preparing chamber 32 may be controlled at a specified air-pressure and cleanliness as described below, and the preparing system 43 may includes a clean booth or bench for germ-free operation so as to prepare the drug or reagents using crude material, i.e. raw functional materials extracted or purified out of transgenic plants P, without contamination.

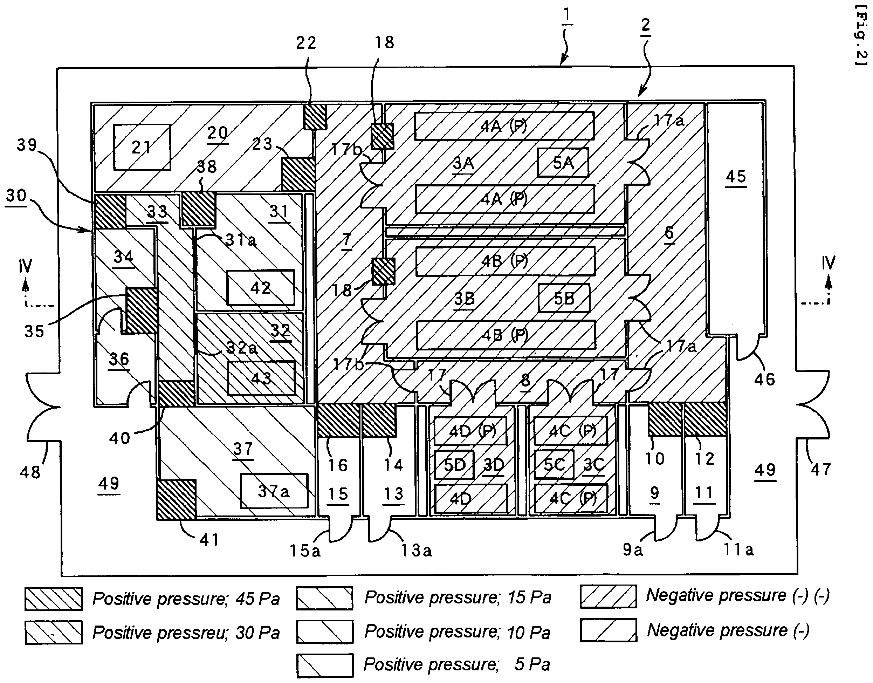

Fig 2 shows an embodiment of atmospheric pressure control of the closed cultivation area 2, the inactivation area 20 and the manufacturing area 30 in the plant factory 1. The cultivation chambers 3A, 3B, 3C, 3D in cultivation area 2, the inactivation area 20 and the manufacturing area 30 may be in independent control from each other of their respective air-conditioner, but the inactivation area 20 and the manufacturing area 30 may be controlled integrally with single air-conditioner. The cultivation chambers 3A, 3B, 3C, 3D may be controlled to be kept at the same negative pressure lower than the ambiance so as to make airflow from outside to inside of each cultivation chamber 3A, 3B, 3C, 3D through airtight gateway 17a, 17b, and 17. The inactivation area 20 may be controlled to be kept at negative pressure less strong than that at the cultivation area 2 so as to make airflow from the inactivation area 20 to the cultivation area 2 through the air-locked passage 22 and gateways 23. The manufacturing area 30 may be controlled to be kept at positive pressure higher than the ambiance. In preferred embodiment, the processing chamber 31 and the dressing room 34 is kept at positive gauge pressure of 15Pa, the anterior chamber 33 is kept at gauge pressure of 30Pa, and the preparing chamber 32 is kept at gauge pressure of 45Pa so as to make suitable airflow within the manufacturing area 30, i.e. airflow from the preparing chamber 32 to the processing chamber 31 and the dressing room 34 through the anterior chamber 33. Further, the arranging chamber 37 in the manufacturing area 30 may be kept at gauge pressure of 10Pa so as to allow airflow from the anterior chamber 33 to the arranging chamber 37. Furthermore, the entrance room 36 may be kept at gauge pressure of 5Pa so as to generate airflow from the dressing room 34 and undressing chamber 35 to the entrance room 36.

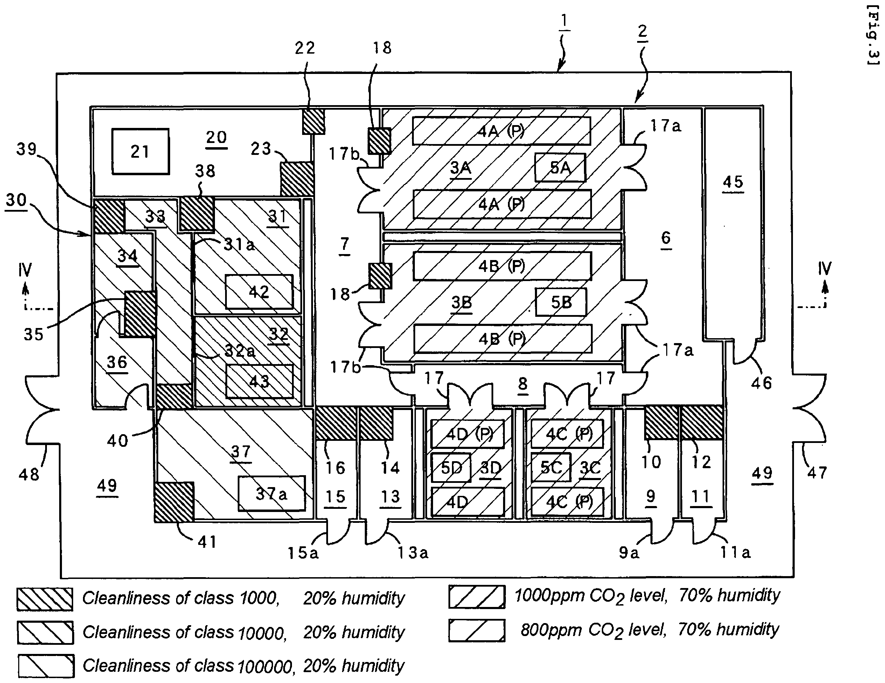

Fig 3 shows an embodiment of cleanliness control of the manufacturing area 30 and carbon-dioxide control of the closed cultivation area 2 in the plant factory 1. In preferred embodiment, the preparing chamber 32 in the manufacturing area 30 is controlled at high cleanliness of class 1000 (i.e. the number of particles of specified size or larger per cubit feet volume of air is less than 10³), whereas the processing chamber 31, anterior chamber 33 and dressing room 34 are controlled at cleanliness of class 10000 (the number of particles per volume of air is less than 10⁴), so as to configure high-class clean area 32 being surrounded with middle-class clean area 31, 33 and 34. The arranging chamber 37 and the entrance room 36 may be controlled at cleanliness of class 100000 (the number of particles per volume of air is less than 10⁵) so as to configure middle-class clean area 31, 33 and 34 being surrounded with low-class clean area 36 and 37. The layout of surrounding the high-class clean area, i.e. the preparing chamber 32, with middle-class clean area prohibits worker's traveling and materials' transfer directly from low-class clean area to high-class area beyond middle-class area, and secures cleanliness and safety of foodstuffs and/or pharmaceuticals manufactured in the preparing chamber 32 and the processing chamber 31 without risks of pollution or contamination. In case the preparing chamber 32 is provided with clean booth or clean bench for germ-free operation, e.g. booth or bench at cleanliness of class A under Good manufacturing practice (GMP) of WHO, it is desirable to provide the arranging chamber 37 with sterilizer for cleaning instruments of germ-free operation, e.g. steam autoclave, and air-locked passage leading to the preparing chamber 31 in order to transfer the instruments from the arranging chamber 37, i.e. low-class clean area, to the preparing chamber 32, i.e. high-class clean area, with the aid of the sterilizer and air-lock passage. Used instruments in the preparing chamber 32 may be returned to the arranging chamber 37 through the anterior chamber 33 and the air-locked passage 40.

In Fig 3, the cultivation chambers 3A, 3C and 3D in the closed cultivation area 2 are controlled at 1,000ppm carbon-dioxide level (CO₂ concentration level), 70% humidity, 25-30°C daytime temperature and 20-25°C nighttime temperature, whereas the cultivation chamber 3B is controlled at 800ppm carbon-dioxide (CO₂) level, 70% humidity, 25-30°C daytime temperature and 20-25°C nighttime temperature by their respective air-conditioners 5A, 5B, 5C, 5D. Fig 7 shows a preferred system of the air-conditioner 5 in each cultivation chamber 3. The air-conditioner 5 may include intake air-filter 70 for introducing outside air; temperature controller 72, humidity controller 73, carbon-dioxide (CO₂) controller 74 and airflow controller 75 for adjusting temperature, humidity, CO₂ level and airflow of the air introduced; and exhaust air-filter 71 including pre-filter (shown as PH) and HEPA filter (i.e. High Efficiency Particulate Air Filter, 99.97%, shown as HF). The temperature controller 72 and the humidity controller 73 have their respective sensors 72a, 73a for measuring temperature and humidity in the cultivation chamber 3, and control the introduced air at suitable temperature and humidity for supplying to air-inlet 76 of the cultivation chamber 3 based on the output of sensors 72a, 73a. The CO₂ controller 74 includes sensor 74a for measuring CO₂ level in the cultivation chamber 3 and carbon-dioxide (CO₂) generator 78, and controls valve 78a of the generator 78 on-off for adjusting the introduced air at suitable CO₂ level for supplying to the cultivation chamber 3. The airflow controller 75 includes adjustment switch 75a, and controls airflow of the air-conditioner 5 for generating suitable distribution of wind and temperature in cultivation chamber 3 based on the input of the switch 75a. The air-conditioners 5A, 5B, 5C, 5D may be separately controlled in accordance with species of transgenic plants P in the cultivation chamber 3A, 3B, 3C, 3D, and provide suitable growth conditions for various plants P by adjusting temperature, humidity, carbon-dioxide level and airflow in the cultivation chamber 3A, 3B, 3C, 3D.

Referring to black arrows shown in Fig 1, manufacturing process of foodstuffs and/or pharmaceuticals in the plant factory 1 may be described as follows. Transgenic plants P are brought in the cultivation area 2 as seeds or materials from unpacking room 11 through the air-locked entrance 12, and planted in either cultivation chambers 3A, 3B, 3C, 3D under suitable growth condition of light, temperature, humidity, airflow and carbon-dioxide level. Post-harvest transgenic plants P are transferred from the cultivation chambers 3A, 3B, 3C, 3D to the inactivation area 20 through the air-locked passage 22 at the posterior chamber 7, and put to the inactivation system 21 suitably adjusted to plants P, e.g. freeze-drying device, grinder, heater, chemical treatment device etc. The inactivated post-harvest plants P by the system 21 are transferred to the processing chamber 31 in the manufacturing area 30 through air-locked passage 38, and reduced into power or tablet for foodstuffs and/or pharmaceuticals by the processing system 42, e.g. mixer, in case transgenic plants P are edible as it is. In case extraction or purification process is required, the inactivated plants P may be divided and purified into the raw functional materials for pharmaceuticals by the processing system 42, e.g. chromatography system or ultracentrifuge system. The raw functional material purified in the processing chamber 31 are transferred to the preparing chamber 32 through the anterior chamber 33, and enclosed in capsule or ampoule with additives as pharmaceuticals for medical or industrial use. Similarly, the foodstuffs processed in the processing chamber 31 may be transferred to the preparing chamber 32 and packaged up using preparing system 43.

The foodstuffs and/or pharmaceuticals processed or prepared in the processing chamber 31 or preparing chamber 32 are transferred into the arranging chamber 37 through the air-locked passage 40 at the anterior chamber 33, and given arrangement for shipping out from the plant factory 1. For example, foodstuffs and/or pharmaceuticals are cleaned and wrapped in the arranging chamber 37 and transferred to shipping area (not depicted in Fig 1) through air-locked gateway 41 for carrying out from the factory 1. As hatching arrows shown in Fig 1, wrapping materials may be brought into the arranging chamber 37 in advance of shipping-out of the foodstuffs and/or pharmaceuticals. In case quality inspection is required, the foodstuffs and/or pharmaceuticals may be sampled from the arranging chamber 37 to testing chamber (not depicted in Fig 1) for quality testing, and transferred to shipping area after quality is confirmed.

Plant factory 1 of this invention is so designed to inactivate transgenic plants P before passing from the closed cultivation area 2 to the manufacturing area 30, to control inside air pressure for generating airflow from the manufacturing area 30 to the cultivation area 2, and to prohibit workers' traveling between the cultivation area 2 and the manufacturing area 30, and then transgenic plants P can be cultivated and turned into foodstuffs and/or pharmaceuticals while containing them securely within the factory 1. Further, the cultivation area 2 may include a plurality of cultivation chamber 3A, 3B, 3C, 3D where growth conditions are controllable separately with respect to light, temperature, humidity, carbon-dioxide level and airflow, more than one transgenic plants P may be cultivated simultaneously and used together for producing various foodstuffs and/or pharmaceuticals. Therefore, it is expected that commercial production of raw functional materials for foodstuffs and/or pharmaceuticals using transgenic plants P will be developed and become more advanced by this invention.

Thus, the object of this invention, namely the provision of a plant factory for cultivating transgenic plants and manufacturing foodstuffs and/or pharmaceuticals from them as well as keeping them inside has been fulfilled.

### EXAMPLE 1

Fig 4 shows a cross-sectional view of the plant factory 1 at line IV-IV in Fig 1. The cultivation chambers 3A, 3B, 3C, 3D may be designed to intercept natural sunlight and use totally artificial lighting for controlling inside light conditions. Each of cultivation chambers 3A, 3B, 3C, 3D includes wholly transparent ceiling board 27, airtight lighting box 25 attached on the ceiling board 27, and heat-exhauster 28 of the lighting box 25 as shown schematically in Fig 7. The artificial lighting system 26 may be equipped within the lighting box 25 and adjusted at suitable light emission spectrum and intensity for growing condition of transgenic plants P. In case transgenic plants P require high-intensity light, e.g. transgenic rice, the artificial lighting system 26 may be ceramic metal halide lamp system for producing high-intensity powerful output for the size. As the lighting box 25 is attached to and sealed by the transparent ceiling board 27, the condition in lighting box 25 can be controlled by the heat-exhauster 28 independently from the condition in cultivation chamber 3 by its air-conditioner 5. As shown in Fig 7, the heat-exhauster 28 may includes exhaust air-filter 80, intake air-filter 81 and temperature controller 82, and introduces outside air into the lighting box 25 through its air-inlet 84 connecting to the inlet air-filter 81, and removes air inside the lighting box 25 through its air-outlet 85 connecting to the exhaust air-filter 80 for cooling the inside. The temperature controller 82 may include sensor 82a for measuring temperature in the lighting box 25, and controls an exhaust fan 83 based on the output of the sensor 83a at suitable introducing airflow for cooling the inside of lighting box 25 since the airflow needs to be varied with temperature of the air. In case transgenic plants P need strict light condition without influence from the outside of cultivation chamber, the cultivation chamber 3 may be designed to have no window or only window with blinds that permit to observe the inside but curtains the light from outside except observation.

### EXAMPLE 2

Fig 5 shows an embodiment of water supply and drainage system in the plant factory 1. The system may include a plurality of reservoirs 54A, 54B, 54C, 54D for the respective cultivation chamber 3A, 3B, 3C, 3D, and drainage sterilizer 60. For example, the reservoirs 54A, 54B, 54C, 54D are supplied with water from a well 50 near the plant factory 1 and provide the water to the hydroponic systems 4A, 4B, 4C, 4D in cultivation chambers 3A, 3B, 3C, 3D. The drainage out of hydroponic systems 4A, 4B, 4C, 4D may be collected to a drainage pit 57, and released to drainageway after disposed by the sterilizer 60 with suitable sterilizing process for inactivating transgenic plant P, e.g. sterilizing process of heating at specified temperature (121°C) during more than specified period (21 minutes). The sterilizer 60 may be designed to inactivate pollen and other organ/tissue of transgenic plants P in drainage so as to prevent leakage of transgenic plants P through drainage. The sterilizers 60 may be located at each of respective hydroponic system 4A, 4B, 4C, 4D as a part of it, or alternatively may be located apart from them for sterilizing unified drainage from them. The reservoirs 54A, 54B, 54C, 54D may include solution preparing mechanism for providing such water solution that prepared with water by dissolving oxygen and adding suitable nutrients for transgenic plants P in the hydroponic systems 4A, 4B, 4C, 4D. In preferred embodiment, the reservoirs 54A, 54B, 54C, 54D include solution controlling system that select kind and volume of nutrients suitable for the species of plants P, and provide measures for preventing disease or blight of plants P. For reduction of the burden on the sterilizer 60, the hydroponic system 4 may include drainage circulation line (not depicted in Fig 5) for returning the drainage out of the system 4 to the reservoir 54 so as to reuse the drainage as supplying water.

In case water from the well 50 is not suitable for transgenic plants P, water softening device 52 and water deionization device 53 may be provided between the well 50 and supply tanks 54A, 54B, 54C, 54D as shown in Fig 5. The well water may also be supplied to the air-conditioners 5A, 5B, 5C, 5D in the cultivation chambers 3A, 3B, 3C, 3D, further to the inactivation area 20 and the manufacturing area 30. Drainage out of there may be collected to the drainage pit 57 and disposed by the sterilizer 60 together with the drainage out of hydroponic systems 4A, 4B, 4C, 4D, however, the drainage out of inactivation area 20 and manufacturing area 30 are able to be released to drainageway directly without sterilizing process of sterilizer 60.

Fig 6 shows another embodiment of water supply and drainage system in the plant factory 1 in which the cultivation chambers 3A, 3B, 3C, 3D are provided with water channels 65A, 65B, 65C, 65D to lead drainage from the air-conditioners 5A, 5B, 5C, 5D to their respective hydroponic systems 4A, 4B, 4C, 4D. As mentioned above, the cultivation chambers 3A, 3B, 3C, 3D may be controlled at around 70% humidity by air-conditioners 5A, 5B, 5C, 5D, and the drainage out of air-conditioners 5A, 5B, 5C, 5D and the condensed dew in cultivation chambers 3A, 3B, 3C, 3D may contain pollen or other organ/tissue of transgenic plants P and need to be inactivated by the sterilizer 60 before releasing. It is desirable to reduce the drainage volume out of plant factory 1, i.e. the burden on the sterilizer 60, to achieve commercial advantage of production of raw functional materials using transgenic plants P as well as to improve efficiency of containment of transgenic plants P within the factory 1. In Fig 6, the drainage from air-conditioners 5A, 5B, 5C, 5D are retuned to the reservoirs 54A, 54B, 54C, 54D by the water channels 65A, 65B, 65C, 65D, and can be reused or recycled as supplying water to the cultivation chambers 3A, 3B, 3C, 3D, and therefore the drainage volume may be reduced efficiently without losing effectiveness of containment of transgenic plants P within the factory 1. As not depicted in Fig 6, the condensed dew in the cultivation chambers 3A, 3B, 3C, 3D may also lead to the reservoirs 54A, 54B, 54C, 54D by the water channels 65A, 65B, 65C, 65D, and be reused or recycled together with the drainage from air-conditioners 5A, 5B, 5C, 5D. Fig 5(B) shows an embodiment of the reservoir 54 that stores the drainage from air-conditioner 5 together with water from the deionization device 53, i.e. the well water, and allows only overflowing water to discharge to the drainage pit 57 for sterilization.

### BRIEF DESCRIPTION OF THE DRAWINGS

Fig 1 is a schematic view of transgenic plant factory according to this invention.
Fig 2 is a schematic view showing atmospheric pressure control in the factory of Fig 1.
Fig 3 is a schematic view showing cleanliness control and carbon-dioxide control in the factory of Fig 1.
Fig 4 is a cross-sectional view of the factory at line IV-IV of Fig 1.
Fig 5 is a schematic view showing embodiment of water supply and drainage system in the factory according to this invention.
Fig 6 is a schematic view showing another embodiment of water supply and drainage system in the factory according to this invention.
Fig 7 is a schematic view showing air-conditioner and artificial lighting system in the factory of Fig 1.
Fig 8 is a result of experiment showing the gene product of transgenic plants retains functional activity even after freeze-drying process.

### REFERENCE SIGNS LIST

| | | | |
|---|---|---|---|
| 1 | transgenic plant factory | 1a | pillar |
| 1b | beam | 1c | base plate |
| 1d | basement | 1e | under-floor piping space |
| 2 | closed cultivation area | 3 | cultivation chamber |
| 4 | hydroponic system | 5 | air conditioner |
| 6 | anterior chamber | 7 | posterior chamber |
| 8 | hallway | 9 | dressing room |
| 10 | air-locked workers' entrance | 11 | unpacking room |
| 12 | air-locked materials entrance | 13 | undressing room |
| 14 | air-locked workers' exit | 15 | carrying-out room |
| 16 | air-locked materials exit | 17 | airtight gateway |
| 18 | air-locked passage | | |
| 20 | inactivation area | 21 | inactivation system |
| 22 | air-locked passage | 23 | air-locked gateway |
| 25 | lighting box | 26 | artificial lighting system |
| 27 | transparent ceiling board | 28 | heat-exhauster |
| 30 | manufacturing area | 31 | processing chamber |
| 31a | airtight gateway | 32 | preparing chamber |
| 32a | airtight gateway | 33 | anterior chamber |
| 33a | hand-washing device | 34 | dressing room |
| 35 | air-locked workers' exit | 36 | entrance room |
| 37 | arranging chamber | 37a | cleaning system |
| 38 | air-locked passage | 39 | air-locked workers' entrance |
| 40 | air-locked passage | 41 | air-locked gateway |
| 42 | processing system | 43 | preparing system |
| 45 | watching and controlling area | 46 | airtight gateway |
| 47 | factory entrance | 48 | factory exit |
| 49 | surrounding corridor | 50 | well |
| 51 | water sterilizer | 52 | water softening device |
| 53 | water deionization device | 54 | reservoir |
| 55 | water pump | 56 | drainage sterilizer |
| 57 | drainage pit | 58 | drainage pump |
| 59 | drainage tank | 60 | drainage sterilizer |
| 61 | water pipe | 62 | water pump |
| 63, | 64 drainage pipe | 65 | water channel |
| 66 | drainage pipe | 70 | intake air-filter |
| 71 | exhaust air-filter | 72 | temperature controller |
| 72a | temperature sensor | 73 | humidity controller |
| 73a | humidity sensor | 74 | carbon-dioxide controller |
| 74a | carbon-dioxide sensor | 75 | airflow controller |
| 75a | airflow adjustment switch | 76 | air-inlet |
| 77 | exhaust outlet | 78 | carbon-dioxide generator |
| 78a | valve | 80 | exhaust air filter |
| 81 | intake air-filter | 82 | temperature controller |
| 82a | temperature sensor | 83 | exhaust fan |
| 84 | air-inlet | 85 | air-outlet |
| P | transgenic plants | | |

Reference signs are incorporated in the claims solely to ease their understanding, and do not limit the scope of the claims.

## Claims

1. A transgenic plant factory (1) comprising
a closed cultivation area (2) equipped with hydroponic system (4) for cultivating transgenic plants and air-conditioner (5) with exhaust air-filter (71) configured to keep the cultivation area (2) at negative pressure;
an inactivation area (20) located next to said cultivation area (2) via air-locked passage (22) equipped with inactivation system (21) to prevent post-harvest transgenic plants from sprouting, growing, proliferating or hybridizing;
a manufacturing area (30) located next to said inactivation area (20) via air-locked passage (38) equipped with system (42, 43) for processing and/or preparing the post-harvest plants into foodstuffs and/or pharmaceuticals;
a sterilizer (60) for sterilizing the drainage from cultivation area (2) ; air-locked workers' gateways (10, 14, 39, 35) provided to the cultivation area (2) and the manufacturing area (30) respectively; and
the cultivation area (2), the inactivation area (20) and the manufacturing area (30) having respective air-conditioners to independently control pressure from each other, and configured to keep the inactivation area (20) at a negative pressure less strong than that at the cultivation area (2) and the manufacturing area (30) at a positive pressure.

2. A transgenic plant factory (1) according to claim 1, wherein said inactivation system (21) is selected from the group consisting of freeze-drying device, grinder, heater and chemical treatment device.

3. A transgenic plant factory (1) according to claim 1 or claim 2, wherein said closed cultivation area (2) includes air-locked workers' entrance (10) and exit (14) separately located with each other, an anterior chamber (6) connected to said entrance (10), a posterior chamber (7) connected to said exit (14) and located next to said inactivation area (20) via air-locked passage (22), and a plurality of cultivation chambers (3A, 3B) located between and connected to said anterior and posterior chambers (6, 7) via airtight gateway (17a, 17b), wherein said cultivation chambers (3A, 3B) are equipped with their respective hydroponic system (4A, 4B).

4. A transgenic plant factory (1) according to claim 3, wherein said closed cultivation area (2) includes a hallway (8) located between and connected to said anterior and posterior chambers (6, 7) via airtight gateway (17a, 17b), and a plurality of cultivation chambers (3C, 3D) located alongside and connected to said hallway (8) via airtight gateway (17), wherein said cultivation chambers (3C, 3D) are equipped with their respective hydroponic system (4C, 4D) .

5. A transgenic plant factory (1) according to claim 3 or claim 4, wherein said cultivation chambers (3A, 3B, 3C, 3D) includes their respective air-conditioner (5A, 5B, 5C, 5D) with exhaust air-filter (71) and water channel (65A, 65B, 65C, 65D) to lead drainage from said air-conditioners (5A, 5B, 5C, 5D) to their respective hydroponic system (4C, 4D).

6. A transgenic plant factory (1) according to claim 5, wherein each of said air-conditioner (5A, 5B, 5C, 5D) includes a controller (74) for controlling carbon-dioxide in the cultivation chamber (3A, 3B, 3C, 3D).

7. A transgenic plant factory (1) according to any one of claims 3 to 6, wherein each of said cultivation chamber (3A, 3B, 3C, 3D) includes wholly transparent ceiling board (27), airtight lighting box (25) attached on said ceiling board (27) and heat-exhauster (28) of said lighting box (25).

8. A transgenic plant factory (1) according to any one of claims 1 to 7, wherein said manufacturing area (30) includes a processing chamber (31) connected to said inactivation area (20) via air-locked passage (38), an anterior chamber (33) connecting to said processing chamber (31) and being kept at positive pressure more strong than that at the processing chamber (31), and a preparing chamber (32) connecting to said anterior chamber (33) and being kept at positive pressure more strong than that at the anterior chamber (33), wherein said air-locked workers' gateway (39, 35) is provided at the anterior chamber (33).

9. A transgenic plant factory (1) according to claim 8, wherein said manufacturing area (30) further includes an arranging chamber (37) connecting to said anterior chamber (33) via air-locked passage (40).

## Patentansprüche

1. Fabrik (1) für transgene Pflanzen, umfassend einen geschlossenen Kultivierungsbereich (2), ausgestattet mit einem Wasserunterdrucksystem (4) zur Kultivierung transgener Pflanzen und mit einer Klimaanlage (5) mit Abluftfilter (71), die so gebaut sind, daß der Kultivierungsbereich (2) unter Unterdruck gehalten wird; ferner umfassend einen Kultivierungsbereich (20), der neben dem Kultivierungsbereich (2) liegt, und zwar über einen Luft gesperrten Durchgang (22), versehen mit einem Inaktivierungssystem (21), um transgene Nacherntepflanzen am Keimen, Wachsen, Fruchtbarwerden oder später Ernte zu hindern; des weiteren umfassend einen Herstellungsbereich (30), der neben dem Inaktivierungsbereich (20) liegt, und zwar über einen Luft gesperrten Durchgang (38), der mit einem System (42, 43) zur Verarbeitung und / oder Zubereitung der Nacherntepflanzen zu Nahrungsmitteln und / oder Pharmazeutika ausgestattet ist; einen Sterilisator (60) zur Sterilisierung der Drainage von dem Kultivierungsbereich (2); des weiteren umfassend Arbeiterzugänge (10, 14, 39, 35) mit Luftschleusen für den Kultivierungsbereich (2) bzw. den Herstellungsbereich (30); wobei der Kultivierungsbereich (2), der Inaktivierungsbereich (20) und der Herstellungsbereich (30) entsprechend klimatisiert sind, um den Druck für jeden von ihnen unabhängig zu steuern, und so gebaut sind, daß der Inaktivierungsbereich (20) auf einem geringeren Unterdruck gehalten wird als derjenige des Kultivierungsbereiches (2), und der Herstellungsbereich (30) auf einem Überdruck gehalten wird.

2. Fabrik (1) für transgene Pflanzen gemäß Anspruch 1, **dadurch gekennzeichnet, daß** das Inaktivierungssystem (21) aus der Gruppe ausgewählt ist, die sich aus einer Gefriertrocknungs-Einrichtung, Mahlvorrichtung, Heizvorrichtung und chemischen Behandlungsvorrichtung zusammensetzt.

3. Fabrik (1) für transgene Pflanzen nach Anspruch 1 oder 2, **dadurch gekennzeichnet, daß** der geschlossene Kultivierungsbereich (2) einen Arbeiterzugang (10) mit Luftschleuse und einen Ausgang (14) aufweist, die getrennt voneinander angeordnet sind, eine vordere Kammer (6), die mit dem Eingang (10) verbunden ist, eine hintere Kammer (7), die mit dem Ausgang (14) verbunden ist und neben dem Inaktivierungsbereich (20) liegt, und zwar über eine Luftschleuse (22), und mit mehreren Kultivierungskammern (3A, 3B), die dazwischen liegen und mit der vorderen und der hinteren Kammer (6, 7) über einen luftdichten Durchgang (17a, 17b) verbunden sind, wobei die Kultivierungskammern (3A, 3B) mit ihrem entsprechenden Unterdruck-Wassersystem (4A, 4B) ausgestattet sind.

4. Fabrik (1) für transgene Pflanzen nach Anspruch 3, **dadurch gekennzeichnet, daß** der geschlossene Kultivierungsbereich (2) einen Korridor (8) aufweist, der zwischen der vorderen und der hinteren Kammer (6, 7) über den luftdichten Zugang (17a, 17b) liegt und mit den genannten Kammern verbunden ist, und daß mehrere Kultivierungskammern (3C, 3D) längsseits des Korridors (8) liegen und mit ihm durch den luftdichten Zugang (17) verbunden sind, wobei die Kultivierungskammern (3C, 3D) mit ihrem entsprechenden Unterdruck-Wassersystem (4C, 4D) ausgestattet sind.

5. Fabrik (1) für transgene Pflanzen nach Anspruch 3 oder 4, **dadurch gekennzeichnet, daß** die Kultivierungskammern (3A, 3B, 3C, 3D) ihre entsprechende Klimaanlage (5A, 5B, 5C, 5D) mit Abluftfilter (71) und Wasserkanal (65A, 65B, 65C, 65D) zur Ableitung von Drainage aus den Klimaanlagen (5A, 5B, 5C, 5D) zu ihrem entsprechenden Wasserunterdrucksystem (4C, 4D) aufweisen.

6. Fabrik (1) für transgene Pflanzen nach Anspruch 5, **dadurch gekennzeichnet, daß** jede der genannten Klimaanlagen (5A, 5B, 5C, 5D) einen Steuerer (74) aufweist, der dazu dient, das Kohlendioxid in der Kultivierungskammer (3A, 3B, 3C, 3D) zu steuern.

7. Fabrik (1) für transgene Pflanzen nach einem der Ansprüche 3 bis 6, **dadurch gekennzeichnet, daß** jede Kultivierungskammer (3A, 3B, 3C, 3D) eine vollständig transparente Deckenplatte (27), einen luftdichten Beleuchtungskasten (25), der auf der Deckenplatte (27) angebracht ist, und eine Wärmeabzugs-Vorrichtung (28) des Beleuchtungskastens (25) aufweist.

8. Fabrik (1) für transgene Pflanzen nach einem der Ansprüche 1 bis 7, **dadurch gekennzeichnet, daß** der Herstellungsbereich (30) eine Behandlungskammer (31) aufweist, die mit dem Inaktivierungsbereich (20) über einen luftdichten Durchgang (38) verbunden ist, sowie eine vordere Kammer (33), die mit der Bearbeitungskammer (31) verbunden ist und auf einem Überdruck gehalten wird, der größer ist als derjenige in der Bearbeitungskammer (31) und eine Herstellungskammer (32), die mit der vorderen Kammer (33) verbunden ist und auf einem Überdruck gehalten wird, der größer ist als derjenige, der auf der vorderen Kammer (33) liegt, wobei der luftdichte Arbeiterzugang (39, 35) an der vorderen Kammer (33) vorgesehen ist.

9. Fabrik (1) für transgene Pflanzen nach Anspruch 8, **dadurch gekennzeichnet, daß** der Herstellungsbereich (30) des weiteren eine Anordnungskammer (37) aufweist, die mit der vorderen Kammer (33) über den luftdichten Durchgang (40) verbunden ist.

## Revendications

1. Usine de plantes transgéniques (1) comprenant :
une zone de culture (2) fermée équipée d'un système hydroponique (4) pour cultiver des plantes transgéniques et d'un climatiseur (5) avec un filtre d'air d'échappement (71) configuré pour maintenir la zone de culture (2) à une pression négative ;
une zone d'inactivation (20) située à côté de ladite zone de culture (2) par l'intermédiaire d'un passage hermétique (22) équipé d'un système d'inactivation (21) pour empêcher des plantes transgéniques post-récolte de germer, de pousser, de proliférer ou de s'hybrider ;
une zone de fabrication (30) située à côté de ladite zone d'inactivation (20) par l'intermédiaire d'un passage hermétique (38) équipé d'un système (42, 43) pour traiter et/ou préparer les plantes post-récolte en aliments et/ou produits pharmaceutiques ;
un stérilisateur (60) pour stériliser le drainage provenant de la zone de culture (2) ;
des passerelles hermétiques pour travailleurs (10, 14, 39, 35), prévues pour la zone de culture (2) et la zone de fabrication (30), respectivement ; et
la zone de culture (2), la zone d'inactivation (20) et la zone de fabrication (30) ayant des climatiseurs respectifs pour réguler la pression indépendamment les unes des autres, et configurés pour maintenir la zone d'inactivation (20) à une pression négative moins forte que celle de la zone de culture (2), et la zone de fabrication (30) à une pression positive.

2. Usine de plantes transgéniques (1) selon la revendication 1, dans laquelle ledit système d'inactivation (21) est choisi dans le groupe constitué d'un dispositif de lyophilisation, d'un broyeur, d'un élément chauffant et d'un dispositif de traitement chimique.

3. Usine de plantes transgéniques (1) selon la revendication 1 ou la revendication 2, dans laquelle ladite zone de culture fermée (2) comprend une entrée (10) et une sortie (14) hermétiques pour travailleurs, disposées séparément l'une de l'autre, une chambre antérieure (6) reliée à ladite entrée (10), une chambre postérieure (7) reliée à ladite sortie (14) et située à côté de ladite zone d'inactivation (20) par l'intermédiaire d'un passage hermétique (22), et une pluralité de chambres de culture (3A, 3B) situées entre et reliées auxdites chambres antérieure et postérieure (6, 7) par l'intermédiaire d'une passerelle hermétique (17a, 17b), lesdites chambres de culture (3A, 3B) étant équipées de leur système hydroponique respectif (4A, 4B).

4. Usine de plantes transgéniques (1) selon la revendication 3, dans laquelle ladite zone de culture (2) fermée comprend un couloir (8) situé entre et relié auxdites chambres antérieure et postérieure (6, 7) par l'intermédiaire d'une passerelle hermétique (17a, 17b), et une pluralité de chambres de culture (3C, 3D) situées le long et reliées audit couloir (8) par l'intermédiaire d'une passerelle hermétique (17), lesdites chambres de culture (3C, 3D) étant équipées de leur système hydroponique respectif (4C, 4D).

5. Usine de plantes transgéniques (1) selon la revendication 3 ou la revendication 4, dans laquelle lesdites chambres de culture (3A, 3B, 3C, 3D) comprennent leur climatiseur respectif (5A, 5B, 5C, 5D) avec un filtre d'air d'échappement (71) et un canal d'eau (65A, 65B, 65C, 65D) pour conduire le drainage desdits climatiseurs (5A, 5B, 5C, 5D) à leur système hydroponique respectif (4C, 4D).

6. Usine de plantes transgéniques (1) selon la revendication 5, dans laquelle chacun desdits climatiseurs (5A, 5B, 5C, 5D) comprend une unité de commande (74) pour réguler le dioxyde de carbone dans la chambre de culture (3A, 3B, 3C, 3D).

7. Usine de plantes transgéniques (1) selon l'une quelconque des revendications 3 à 6, dans laquelle chacune desdites chambres de culture (3A, 3B, 3C, 3D) comprend un panneau de plafond entièrement transparent (27), une boîte d'éclairage hermétique (25) attachée sur ledit panneau de plafond (27), et un dispositif d'évacuation de chaleur (28) de ladite boîte d'éclairage (25) .

8. Usine de plantes transgéniques (1) selon l'une quelconque des revendications 1 à 7, dans laquelle ladite zone de fabrication (30) comprend une chambre de traitement (31) reliée à ladite zone d'inactivation (20) par l'intermédiaire d'un passage hermétique (38), une chambre antérieure (33) reliée à ladite chambre de traitement (31) et maintenue à une pression positive plus forte que celle dans la chambre de traitement (31), et une chambre de préparation (32) reliée à ladite chambre antérieure (33) et maintenue à une pression positive plus forte que celle dans la chambre antérieure (33), ladite passerelle hermétique (39, 35) pour travailleurs étant située au niveau de la chambre antérieure (33).

9. Usine de plantes transgéniques (1) selon la revendication 8, dans laquelle ladite zone de fabrication (30) comprend en outre une chambre de disposition (37) reliée à ladite chambre antérieure (33) par l'intermédiaire d'un passage hermétique (40).
